# EUROPEAN PATENT SPECIFICATION

(11) **EP 4 354 332 B1**
(45) Date of publication and mention of the grant of the patent: **04.06.2025**
(21) Application number: 22201175.1
(22) Date of filing: 12.10.2022
(51) Int. Cl.: G06F 21/64, H04L 9/00

(54) **METHOD FOR SECURING THE PROCESSING OF A DIGITAL ASSET, CORRESPONDING COMPUTER PROGRAM PRODUCTS AND DEVICES**
VERFAHREN ZUR SICHERUNG DER VERARBEITUNG EINER DIGITALEN ANLAGE, ENTSPRECHENDE COMPUTERPROGRAMMPRODUKTE UND VORRICHTUNGEN
PROCÉDÉ DE SÉCURISATION DU TRAITEMENT D'UN ACTIF NUMÉRIQUE, PRODUITS PROGRAMME D'ORDINATEUR ET DISPOSITIFS CORRESPONDANTS

(43) Date of publication of application: 17.04.2024
(73) Proprietor: Nagravision Sarl, 1033 Cheseaux-sur-Lausanne (CH)
(72) Inventor: STRANSKY-HEILKRON, Philippe, 1033 Cheseaux-sur-Lausanne (CH)
(74) Representative: Ipside

(56) References cited:
- JP-A- 2021 166 028
- US-A1- 2021 248 214
- US-A1- 2022 198 034

## Description

### 1. FIELD OF THE DISCLOSURE

The field of the disclosure is that of the processing of digital assets (or digital contents).

More specifically, the disclosure relates to a technology for securing the processing of such digital assets.

The disclosure can be of interest in any field wherein digital assets have to be processed. This may be the case for instance in industries producing such digital assets, e.g. for the production of audiovisual contents.

### 2. TECHNOLOGICAL BACKGROUND

A digital asset can represent considerable value, depending on its usage and/or its unicity. Examples of such digital assets are digital images, videos, sounds, and any digital asset that can be sensed with the appropriate rendering mechanism. Images and sounds are the most common digital assets that can be sensed by humans, but new technologies enable "rendering" of touch, smell and very soon taste. Some digital assets can be considered as piece of art, with high market value; other digital assets can represent an extension of human body, like a weapon or a spaceship in an online game.

Digital assets can also be made of a digital object and possibly with metadata, for example for object-oriented media, where the sound of a flying bee is rendered from the combination of a digital representation of the sound of the bee and metadata describing the flying path of the bee.

The problem is that the production of digital assets can involve different parties, e.g. with subcontractors. For instance, the production of an audiovisual content, e.g. a movie, can involve, on one hand, the studios and producers and, on the other hand, different post-production companies (i.e. processors) that process the content according to the contract with studios and producers. However, at each processing step of the content, the content needs to be transferred from one post-production company to another one. The content may thus end up in different places, i.e. in different servers of different companies in practice. There is thus a risk that the content may be pirated or that additional unauthorized processing may be applied to the content.

There is thus a need for a method that allows securing the access to a digital asset during different processing steps, e.g. as required for its production. There is a need for having such method that secures the processing applied to the digital asset while keeping record of the different processing steps actually applied to the digital asset.

Patent document JP2021166028 related to an NFT access restriction system that sets access restrictions on NFTs using encrypted NFT data recorded on a blockchain, is regarded as relevant prior art.

### 3. SUMMARY

A particular aspect of the present disclosure relates to a method for securing the processing of a digital asset, named initial digital asset, according to at least one processing step delivering an output digital asset from an input digital asset which is a function of the initial digital asset. The input digital asset and the output digital asset are associated to corresponding access conditions. Said at least one processing step is executed by at least one electronic device, named processor electronic device, communicatively connected to at least one server implementing a blockchain. According to such method, an electronic device, named producer electronic device, communicatively connected to said at least one server, executes:
- creating an NFT (for "Non-Fungible Token"), named initial NFT, assigned to a wallet, named producer wallet, in the blockchain. The producer wallet is associated with the producer electronic device and the initial NFT is associated with the initial digital asset, the initial NFT comprising:
   - access conditions, named input access condition, to the initial digital asset before execution of a first processing step among said at least one processing step. The first processing step delivers a first output digital asset from the initial digital asset; and
      for said at least one processing step delivering an output digital asset from an input digital asset which is a function of the initial digital asset, the initial NFT comprises:
         - access conditions, named post-processing access conditions, to the input digital asset after the execution of the processing step; and
         - access conditions, named output access conditions, to the output digital asset delivered by the processing step,
      at least one of the input digital asset being the initial digital asset, the respective output digital asset being the first output digital asset;
         - assigning the initial NFT to a wallet, in the blockchain, associated with a first processor electronic device implementing the first processing step.

Thus, the present disclosure proposes a new and inventive solution for securing the access to a digital asset during different processing steps, e.g. as required for its production.

More particularly, the proposed solution relies on the use of NFT(s) for managing the access conditions to the digital asset while keeping record of the different processing steps actually applied to the digital asset. Indeed, the assignment of such NFT to the wallet of a processor that has to implement a given processing step allows keeping record of such assignment and processing, e.g. through the log of the assignments in the blockchain. This can be based e.g. on the smart contract between the producer wallet and the processor wallet, or between different processors wallets. Furthermore, having the access conditions to the digital asset as delivered by each considered processing step embedded in such NFT(s) allows insuring that the processors effectively execute the processing they have to, and only the processing they have to. In particular, the post-processing access conditions allow insuring e.g. that the input digital asset associated to those conditions will not be further processed by the processor that applied the processing step to this input digital asset. This allows securing the overall processing applied to the digital asset while keeping record of the different processing steps actually applied to the digital asset.

In some embodiments, said at least one processing step comprises a plurality of processing steps, a workflow scheduling the plurality of processing steps.

In some embodiments, the producer electronic device executes: assigning access rights to said at least one processor electronic device for having the processor electronic device allowed or not to execute all or part of said at least one processing step according to the access conditions.

Thus, the producer keeps ownership of the processing step(s) a given processor is allowed to execute on the digital asset.

In some embodiments, the producer electronic device executes: receiving, from the blockchain, an information indicative that an NFT, named derivative NFT, has been assigned by a second processor electronic device to the producer wallet. The second processor electronic device implements at least one second processing step among said at least one processing step, the second processing step delivering a second output digital asset from the first output digital asset. The derivative NFT is associated with the second output digital asset and comprises access conditions to the second output digital asset.

Thus, the blockchain keeps record of the ending of the processing implemented by the second processor electronic device, e.g. through the log of the assignment in the blockchain.

In some embodiments, the second processor electronic device is the first processor electronic device, the second input digital asset being the initial digital asset, the second output digital asset being the first output digital asset.

In some embodiments, the derivative NFT comprises:
- input access conditions to the second output digital asset before execution of a third processing step among said at least one processing step. The third processing step delivers a third output digital asset from the second output digital asset, the input access conditions to the second output digital asset before execution of the third processing step being the output access conditions to the second output digital asset delivered by the second processing step; and

for at least one further processing step among said at least one processing step, the further processing step delivering a further output digital asset from a further input digital asset which is a function of the initial digital asset, the derivative NFT comprises:
   - post-processing access conditions to the further input digital asset after the execution of the further processing step; and
   - output access conditions to the further output digital asset delivered by the further processing step,
at least one of the further input digital asset being the second output digital asset, the respective further output digital asset being the third output digital asset.

Thus, the access conditions to the different versions of the digital assets delivered by the different processing steps are propagated in the NFT generated after the implementation of each of the processing steps.

In some embodiments, the producer electronic device executes: assigning the derivative NFT to a wallet, in the blockchain, associated with a third processor electronic device implementing the third processing step delivering a third output digital asset from the second output digital asset.

In some embodiments, the third processor electronic device is the second processor electronic device or the first processor electronic device.

In some embodiments, the derivative NFT is an updated version of the initial NFT.

Thus, the generation of the derivative NFT reduces to the update of the initial NFT. In such embodiments a new derivative NFT is not necessarily created as such after each processing step. However, in some embodiments an hybrid approach can be considered and the initial NFT can be updated during the execution of all or part of the processing steps while a new derivative NFT is created for the remaining, if any, of the processing steps.

Another aspect of the present disclosure relates to a method for securing the processing of a digital asset, named initial digital asset, according to at least one processing step delivering an output digital asset from an input digital asset which is a function of the initial digital asset. The input digital asset and the output digital asset are associated to corresponding access conditions. Said at least one processing step is executed by at least one electronic device, named processor electronic device, communicatively connected to at least one server implementing a blockchain. According to such method, a given processor electronic device implementing at least one given processing step among said at least one processing step, the given processing step delivering a given output digital asset from a given input digital asset function of the initial digital asset, executes for the given processing step:
- receiving from the blockchain, an information indicative that an NFT, named input NFT, has been assigned to a wallet, in the blockchain, associated with the given processor electronic device. The input NFT is associated with the given input digital asset, the input NFT comprising:
   - access conditions, named input access condition, to the given input digital asset before execution of the given processing step;
      for at least one further processing step among said at least one processing step, the further processing step delivering a further output digital asset from a further input digital asset which is a function of the initial digital asset, the input NFT comprises:
         - access conditions, named post-processing access condition, to the further input digital asset after the execution of the processing step; and
         - access conditions, named output access conditions, to the further output digital asset,
      at least one of the further input digital asset being the given input digital asset, the respective further output digital asset being the given output digital asset;
- comparing the input access conditions to the given input digital asset with access rights previously assigned to the given processor electronic device delivering an information representative of the given processor electronic device being allowed or not to execute the given processing step;
if the information is representative of the given processor electronic device being allowed to execute the given processing step:
- executing the given processing step;
- generating an NFT, named derivative NFT, in the blockchain, associated with the given output digital asset, the derivative NFT comprising access conditions to the given output digital asset.

Thus, the given processor electronic device executes only the processing step it is allowed to through the comparison of its access rights with the access conditions associated with the given input digital asset in the input NFT. Furthermore, it is kept record of the access to the given input digital asset as well as of the processing performed by the given processor electronic device through the assignment of the NFT to the wallet of the processor.

In some embodiments, if the information is representative of the given processor electronic device not being allowed to execute the given processing step, the given processor electronic device executes: sending, to the blockchain, an information indicative that the given processor electronic device is not allowed to execute the given processing step.

Thus, the blockchain records the fact that the given processor electronic device is not allowed to execute the considered processing step(s), e.g. through the log associated to the erasing of the input NFT from the wallet associated with the given processor electronic device or to the assignment of the input NFT to another processor electronic device.

In some embodiments, the given input digital asset is the initial digital asset

In some embodiments, the derivative NFT comprises:
- input access conditions to the given output digital asset before execution of a given further processing step among said at least one processing step. The given further processing step delivers a given further output digital asset from a given further input digital asset which is a function of the initial digital asset. The given further input digital asset is the given output digital asset delivered by the given processing step, the input access conditions to the given further input digital asset before execution of the given further processing step being the output access conditions to the given output digital asset; and

for at least one further processing step among said at least one processing step, the further processing step delivering a further output digital asset from a further input digital asset which is a function of the initial digital asset, the derivative NFT comprises:
   - post-processing access conditions to the further input digital asset after the execution of the further processing step; and
   - output access conditions to the further output digital asset delivered by the further processing step,
at least one of the further input digital asset being the given output digital asset, the respective further output digital asset being the given further output digital asset.

Thus, the access conditions for the different versions of the digital assets delivered by the different processing steps are propagated in the NFT generated after the implementation of each of the processing steps.

In some embodiments, the given processor electronic device executes: receiving, from an electronic device, named producer electronic device, communicatively connected to said at least one server, the access rights for having the given processor electronic device allowed or not to execute said at least one given processing step according to the access conditions.

Thus, the producer keeps ownership of the processing a given processor is allowed to execute on the digital asset.

In some embodiments, the given processor electronic device executes: assigning the derivative NFT to a wallet, in the blockchain, associated with a further processor electronic device implementing the given further processing step among said at least one processing step.

In some embodiments, the given processor electronic device executes: assigning the derivative NFT to a wallet, in the blockchain, associated with the producer electronic device.

In some embodiments, the derivative NFT is an updated version of the input NFT.

Another aspect of the present disclosure relates to a computer program product comprising program code instructions for implementing the above-mentioned method for securing the processing of a digital asset (in any of the different embodiments discussed above), when the program is executed on a computer or a processor.

Another aspect of the present disclosure relates to an electronic device configured for implementing all or part of the steps of the above-mentioned method for securing the processing of a digital asset as executed by the producer electronic device (in any of the different embodiments discussed above). Thus, the features and advantages of this device are the same as those of the corresponding steps of said method. Therefore, they are not detailed any further.

Another aspect of the present disclosure relates to an electronic device configured for implementing all or part of the steps of the above-mentioned method for securing the processing of a digital asset as executed by the given processor electronic device (in any of the different embodiments discussed above). Thus, the features and advantages of this device are the same as those of the corresponding steps of said method. Therefore, they are not detailed any further.

### 4. LIST OF FIGURES

Other features and advantages of embodiments shall appear from the following description, given by way of indicative and non-exhaustive examples and from the appended drawings, of which:
- Figure 1 illustrates processors' servers communicatively connected to a producer's server and to servers implementing a blockchain according to one embodiment of the present disclosure;
- Figure 2 illustrates a workflow identifying processing steps to be applied to an initial digital asset by the processors' servers of Figure 1 according to one embodiment of the present disclosure;
- Figure 3 illustrates an NFT as used for securing the processing of the initial digital asset by the processors' servers of Figure 1 according to one embodiment of the present disclosure;
- Figure 4 illustrates the steps of a method for securing the processing of a digital asset according to one embodiment of the present disclosure;
- Figure 5 illustrates an example of the structural blocks of an electronic device allowing steps of the method for securing the processing of a digital asset of Figure 4 to be executed by the producer's server of Figure 1 according to one embodiment of the present disclosure;
- Figure 6 illustrates an example of the structural blocks of an electronic device allowing steps of the method for securing the processing of a digital asset of Figure 4 to be executed by the processors' servers of Figure 1 according to one embodiment of the present disclosure.

### 5. DETAILED DESCRIPTION

In all of the Figures of the present document, the same numerical reference signs designate similar elements and steps.

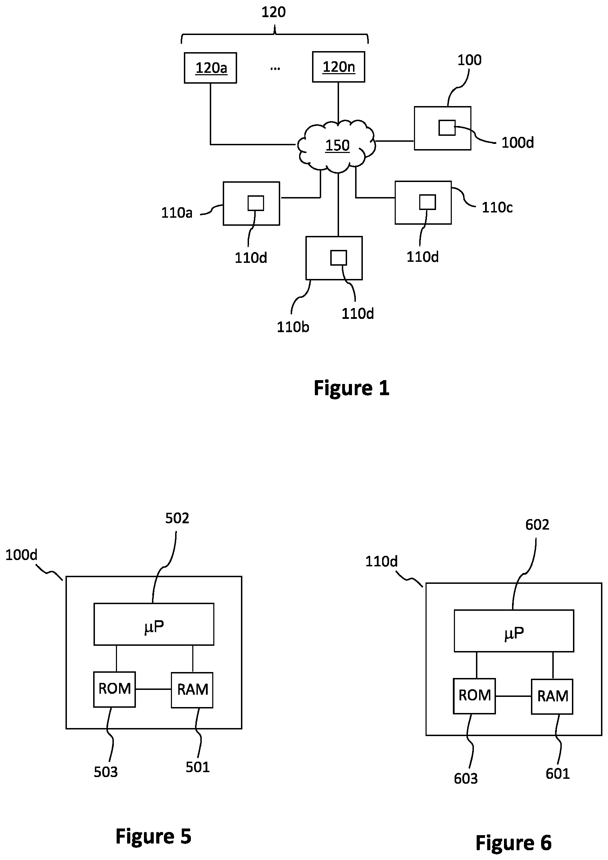

Referring now to **Figure 1****,** we describe processors' servers 110a, 110b, 110c communicatively connected to a producer's server 100 and to servers 120a, 120b, ..., 120n implementing a blockchain 120 according to one embodiment of the present disclosure.

More particularly, the processors' servers 110a, 110b, 110c and the producer's server 100 are communicatively connected to the servers 120a, 120b, ..., 120n implementing the blockchain 120 through a wired communications link that goes through a core network 150. Such wired communications link is e.g. a xDSL communications link and implements e.g. an internet protocol.

However, in some embodiments, the communications link between the above-mentioned servers goes through a wireless communications link, e.g. based on a cellular protocol (e.g. a 3GPP 2G, 3G, 4G or 5G protocol) or on a WiMAX protocol.

Back to Figure 1, the blockchain 120 registers NFT(s) associated to digital assets (e.g. digital images, videos, sounds, touch, smell and any digital asset that can be sensed by a human with the appropriate rendering mechanism). All or part of the NFT(s) registered in the blockchain 120 can be managed by the processors' servers 110a, 110b, 110c and/or by the producer's server 100.

In the present embodiment, the communications link between the producer's server 100 and the plurality of servers 120a, ..., 120n goes through the same core network 150 as does the communications link between the processors' servers 110a, 110b, 110c and the plurality of servers 120a, ..., 120n. However, in other embodiments, the communications link between the producer's server 100 and the plurality of servers 120a, ..., 120n and the communications link between the processors' servers 110a, 110b, 110c and the plurality of servers 120a, ..., 120n go through different communications core networks (e.g. a wired vs. a wireless communications network).

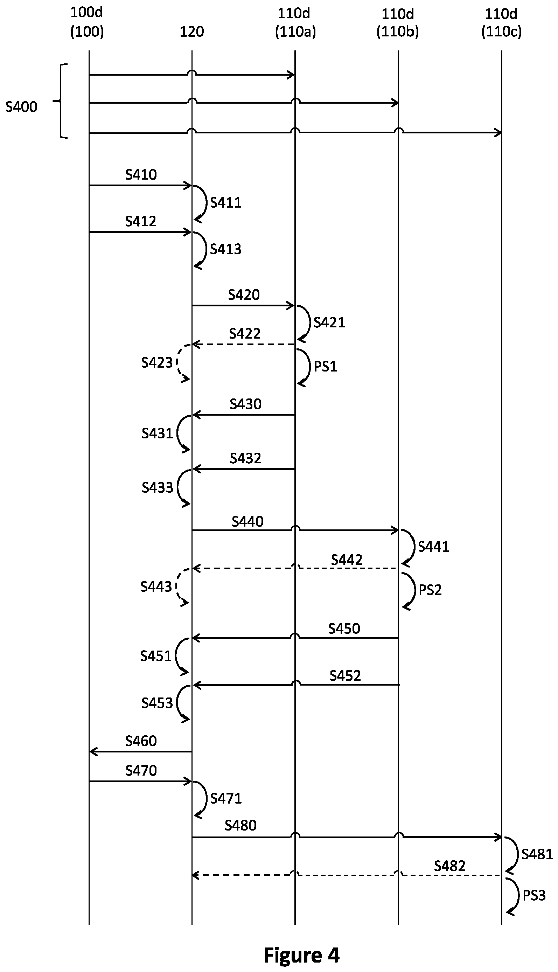

Back to Figure 1, the producer's server 100 implements an electronic device 100d, named producer electronic device 100d in the sequel, that comprises means allowing some steps of the method for securing the processing of a digital asset of Figure 4 to be executed. In the same way, the processors' servers 110a, 110b, 110c implement an electronic device 110d, named processor electronic device 110d in the sequel, that comprises means allowing some steps of the method for securing the processing of a digital asset of Figure 4 to be executed.

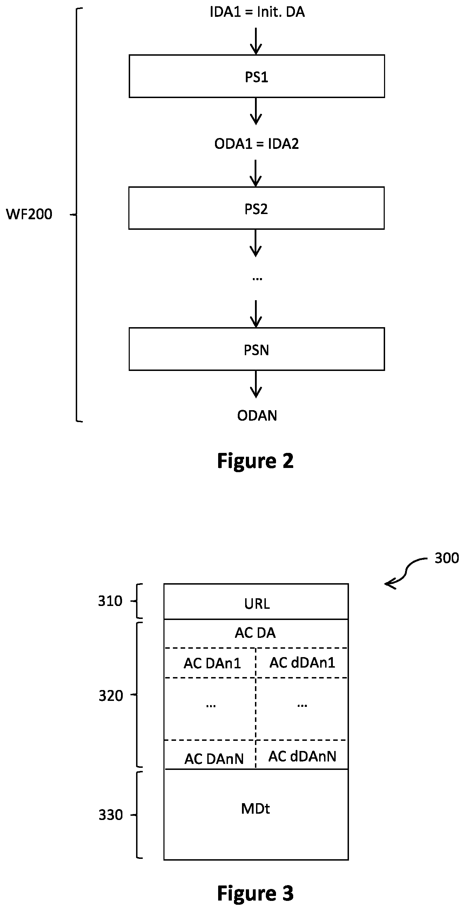

In practice, such producer's server belongs to a producer of the final digital asset, e.g. a movie, obtained after the application of the processing step(s) on an initial digital asset. The processing step(s) are executed by the processors' servers 110a, 110b, 110c that belong e.g. to post-production compagnies. In some embodiments, there is only one processors' server 110a involved in the processing of the initial digital asset. In this case, the processors' server 110a may implement a single processing step or a plurality of processing steps. Whatever the number of processors' servers 110a, 110b, 110c involved the processing of the initial digital asset, when a plurality of processing steps has to be applied to the initial digital asset, those processing steps may be scheduled through a workflow WF200 as described below in relation with Figure 2.

Referring now to **Figure 2****,** we describe a workflow WF200 identifying a plurality of N processing steps PS1, PS2, ..., PSN to be applied to an initial digital asset by the processors' servers 110a, 110b, 110c according to one embodiment of the present disclosure.

More particularly, the workflow WF200 schedules the different processing steps PS1, PS2, ..., PSN as follows:
- the first processing step PS1 delivers a first output digital asset ODA1 from a first input digital asset IDA1 which is the initial digital asset to be processed;
- the second processing step PS2 delivers a second output digital asset ODA2 from a second input digital asset IDA2 which is the first output digital asset ODA1;
- This chaining of successive processing steps holds up for each processing step up to the N-th processing step PSN that delivers a N-th output digital asset ODAN from a N-th input digital asset which is the (N-1)-th output digital asset.

For instance, such processing steps relate to rescaling, formatting, the colorization, subtitling, etc. when the initial digital asset is a movie. The workflow schedules the sequence of processing to be applied on the initial digital asset e.g. by post-production companies.

Furthermore, for each processing step, the workflow defines access conditions to the respective input digital asset and output digital asset. Such access conditions ensure that the respective processing step is authorized and that the respective input digital asset is processed by the authorized processor (e.g. which processor's server and which software of which processor is authorized). In practice, such authorization is checked through the comparison of the access conditions with access rights assigned by the producer's server 100 to the processors' servers 110a, 110b, 110c as detailed below in relation with Figure 4.

Back to Figure 2, for a given processing step, the access conditions for the input digital asset are defined both:
- for the input digital asset before the application of the processing step to the input digital asset. In the sequel, such access conditions are named input access conditions to the input digital asset. Such input access conditions allow controlling e.g. which processor is allowed to process the input digital asset and for what processing;
- for the input digital asset after the application of the processing step to the input digital asset. In the sequel, such access conditions are named post-processing access conditions to the input digital asset. Such post-processing access conditions allow controlling e.g. that the processor that processed the input digital asset with the expected processing cannot access any more to this input digital asset.

Conversely, the access conditions for the output digital asset delivered by a given processing step are named output access conditions to the output digital asset in the sequel.

As discussed above, in some embodiments, only one processing step has to be applied to the initial digital asset. In such case, no workflow WF200 is needed.

Referring now to **Figure 3****,** we describe an NFT 300 as used for securing the processing of the initial digital asset by the processors' servers 110a, 110b, 110c according to one embodiment of the present disclosure. Such NFT 300 is registered in the blockchain 120 and can be managed by the processors' servers 110a, 110b, 110c and/or by the producer's server 100.

The NFT 300 comprises at least the following data fields:
- a first data field 310 comprising information identifying the digital asset to be processed. Such information is for instance an URL (for "Uniform Resource Locator") identifying a storage location for the digital asset;
- a second data field 320 comprising the access conditions to the input and output digital asset corresponding to each processing steps scheduled by the workflow WF200; and
- a third data field 330 comprising metadata associated with the digital asset identified by the information in the first data field 310. For instance, for a movie, such metadata may comprise technical metadata such as e.g. format, resolution, frames/sec, etc. and/or content metadata such as e.g. actors, scene description, etc.

More particularly, the second data field 320 comprises:
- input access conditions, AC DA, to the initial digital asset before execution of a first processing step PS1 among the processing steps scheduled by the workflow WF200, the first processing step PS1 delivering a first output digital asset from a first input digital asset which is the initial digital asset in this case; and
for each processing step scheduled by the workflow WF200, such processing step delivering an output digital asset from an input digital asset which is a function of the initial digital asset, the second data field 320 of the NFT 300 comprises:
- post-processing access conditions, AC DAn1, ..., AC DAnN, to the input digital asset after the execution of the processing step; and
- output access conditions, AC dDAn1, ..., AC dDAnN, to the output digital asset delivered by the processing step.

One of the processing steps scheduled by the workflow WF200 is the first processing step PS1. Thus, at least one of the post-processing access conditions, AC DAn1, ..., AC DAnN, relates to the initial digital asset after execution of the first processing step. The respective output digital asset is thus the first output digital asset and the respective output access conditions, AC dDAn1, ..., AC dDAnN is associated to the first output digital asset. There is thus a chaining (e.g. daisy chaining) in the access conditions listed in the second data field 320 that reflects the chaining of the processing steps as scheduled by the workflow WF200. In other words, the output access conditions, AC dDAn1, ..., AC dDAnN, to a given output digital asset delivered by a given processing step is used as the input access conditions for a subsequent processing step that applies to the given output digital asset.

The NFT 300 illustrated in Figure 3 is the initial NFT 300 as created by the producer's server 100 as it comprises the access conditions corresponding to all the processing steps scheduled by the workflow WF200. However, derivative NFTs are also generated by the processors' servers 110a, 110b, 110c along with the execution of the processing steps scheduled by the workflow WF200. As discussed below in relation with Figure 4, such derivative NFTs comprise the access conditions corresponding to the remaining processing steps of the workflow WF200 not yet executed. Depending on the implementations, such a derivative NFT is an updated version of the initial NFT 300 registered in the blockchain 120 or is a new created NFT registered in the blockchain 120.

Referring now to **Figure 4****,** we describe the steps of a method for securing the processing of a digital asset according to one embodiment of the present disclosure.

More particularly, in a **step S400,** the producer electronic device 100d assigns access rights to the processor electronic devices 110d of the different processors' servers 110a, 110b, 110c for having the processor electronic devices 110d allowed or not to execute the respective processing steps the processors' servers 110a, 110b, 110c have to execute according to access conditions to the digital asset. In the present embodiment, the access conditions are the ones defined through the workflow WF200 and implemented in the NFT 300 as discussed above in relation with Figure 2 and Figure 3.

Depending on the embodiments, such assignment may be implemented through the direct sending, going through the core network 150, of the corresponding access rights to the processor electronic devices 110d. Alternatively, such assignment may be implemented through the assignment of the access rights to respective wallets, in the blockchain 120, associated with the processors' servers 110a, 110b, 110c that have to execute the processing steps.

However, in some embodiments, the step S400 is not implemented, e.g. when the access rights are predefined access rights implemented by default in the processor electronic devices 110d.

Back to Figure 4, in a **step S410,** the producer electronic device 100d creates the initial NFT 300 associated with the initial digital asset, the initial NFT 300 being assigned to a wallet, named producer wallet, in the blockchain 120. The producer wallet is associated with the producer electronic device 100d. Such initial NFT 300 comprises the access conditions as detailed above in relation with Figure 3.

Back to Figure 4, in a corresponding manner, in a **step S411,** the blockchain 120 creates the initial NFT 300 and assigns the initial NFT 300 to the producer wallet, e.g. following information received from the producer electronic device 100d during step S410.

In a **step S412,** the producer electronic device 100d assigns the initial NFT 300 to a wallet, in the blockchain 120, associated with a first processor electronic device 110d implementing a first processing step PS1 delivering a first output digital asset from the initial digital asset, e.g. as scheduled by the workflow WF200. The first processor electronic device 110d is for instance the processor electronic device 110d implemented in the processors' server 110a.

In a corresponding manner, in a **step S413,** the blockchain 120 assigns the initial NFT 300 to the wallet associated with the first processor electronic device 110d, e.g. following information received from the producer electronic device 100d during step S412.

More particularly, the assignment of such NFT to the wallet of a processor that has to implement a given processing step allows keeping record of such assignment and processing, e.g. through the log of the assignments in the blockchain. This can be based e.g. on the smart contract between the producer wallet and the processor wallet, or between different processors wallets. Furthermore, having the access conditions to the digital asset as delivered by each considered processing step embedded in such NFT(s) allows insuring that the processors effectively execute the processing they have to, and only the processing they have to. This allows securing the processing applied to the digital asset while keeping record of the different processing steps actually applied to the digital asset.

Back to Figure 4, in a **step S420,** the first processor electronic device 110d receives, from the blockchain 120, an information indicative that the input NFT 300, has been assigned to the wallet associated with the first processor electronic device 110d.

In a **step S421,** the first processor electronic device 110d compares the input access conditions to the initial digital asset, as defined in the initial NFT 300, with access rights previously assigned to the first processor electronic device 110d. Such comparison delivers an information representative of the first processor electronic device 110d being allowed or not to execute the first processing step PS1.
if the information is representative of the first processor electronic device 110d not being allowed to execute the first processing step PS1, the first processor electronic device 110d sends to the blockchain 120, in a **step S422,** an information indicative that the first processor electronic device 110d is not allowed to execute the first processing step PS1. Thus, the blockchain records the fact that the first processor electronic device 110d is not allowed to execute the considered processing step, e.g. through the log associated to the erasing of the initial NFT 300 from the wallet associated with the first processor electronic device 110d or to the assignment of the initial NFT 300 to another processor electronic device 110d.

If the information is representative of the first processor electronic device 110d being allowed to execute the first processing step PS1, the first processor electronic device 110d executes the first processing step PS1. Thus, the first processor electronic device 110d executes only the processing step it is allowed to through the comparison of its access rights with the access conditions associated with the initial digital asset in the initial NFT 300. Furthermore, it is kept record of the access to the initial digital asset as well as of the first processing step PS1 performed by first processor electronic device 110d through the assignment of the initial NFT 300 to the wallet of the first processor electronic device 110d.

In a **step S430,** the first processor electronic device 110d generates an NFT, named first derivative NFT, in the blockchain 120, associated with the first output digital asset. The first derivative NFT comprises access conditions to the first output digital asset.

More particularly, following the chaining (e.g. daisy chaining) mechanism of the access conditions in the initial NFT 300 discussed above in relation with Figure 3, the first derivative NFT comprises:
- input access conditions to a second input digital asset, which is the first output digital asset in this case, before execution of a second processing step PS2 among the processing steps scheduled by the workflow WF200. The second processing step PS2, delivers a second output digital asset from the second input digital asset which is a function of the initial digital asset. The input access conditions to the second input digital asset before execution of the second processing step PS2 being the output access conditions to the first output digital asset delivered by the first processing step PS1.
and, for at least one further processing step among the processing steps scheduled by the workflow WF200, the further processing step delivering a further output digital asset from a further input digital asset which is a function of said initial digital asset, the derivative NFT comprises:
- post-processing access conditions to the further input digital asset after the execution of the further processing step; and
- output access conditions to the further output digital asset delivered by the further processing step.
One of the further processing steps is the second processing step PS2. Thus, at least one of the further input digital asset is the first output digital asset, the respective further output digital asset being the second output digital asset.

In a corresponding manner, in a **step S431,** the blockchain 120 generates the first derivative NFT, e.g. following information received from the producer electronic device 100d during step S430.

Depending on the implementations, such first derivative NFT is an updated version of the initial NFT 300 registered in the blockchain 120 or is a new created NFT registered in the blockchain 120. Thus, the generation of the derivative NFT may reduce to the update of the initial NFT 300. In such embodiments a new derivative NFT is not necessarily created as such after each processing step. However, in some embodiments a hybrid approach can be considered and the initial NFT can be updated during the execution of all or part of the processing steps while a new derivative NFT is created for the remaining, if any, of the processing steps.

In a **step S432,** the first processor electronic device 110d assigns the first derivative NFT to a wallet, in the blockchain 120, associated with a second processor electronic device 110d implementing the second processing step PS2 scheduled by the workflow WF200. The second processor electronic device 110d is for instance the processor electronic device 110d implemented in the processors' server 110b.

In a corresponding manner, in a **step S433,** the blockchain 120 assigns the first derivative NFT to the wallet associated with the second processor electronic device 110d, e.g. following information received from the second processor electronic device 110d during step S432.

In a **step S440,** the second processor electronic device 110d receives, from the blockchain 120, an information indicative that the first derivative NFT, has been assigned to the wallet associated with the second processor electronic device 110d.

In a **step S441,** the second processor electronic device 110d compares the input access conditions to the second input digital asset, which is the first output digital asset in this case, as defined in the first derivative NFT, with access rights previously assigned to the second processor electronic device 110d. Such comparison delivers an information representative of the second processor electronic device 110d being allowed or not to execute the second processing step PS2.
if the information is representative of the second processor electronic device 110d not being allowed to execute the second processing step PS2, the second processor electronic device 110d sends to the blockchain 120, in a **step S442,** an information indicative that the second processor electronic device 110d is not allowed to execute the second processing step PS2. Thus, the blockchain records the fact that the second processor electronic device 110d is not allowed to execute the considered processing step, e.g. through the log associated to the erasing of the first derivative NFT from the wallet associated with the second processor electronic device 110d or to the assignment of the first derivative NFT to another processor electronic device 110d.

If the information is representative of the second processor electronic device 110d being allowed to execute the second processing step PS2, the second processor electronic device 110d executes the second processing step PS2. Thus, the second processor electronic device 110d executes only the processing step it is allowed to through the comparison of its access rights with the access conditions associated with the second input digital asset, which is the first output digital asset in this case, in the first derivative NFT. Furthermore, it is kept record of the access to the initial digital asset as well as of the second processing step PS2 performed by the second processor electronic device 110d through the assignment of the first derivative NFT to the wallet of the second processor electronic device 110d.

In a **step S450,** the second processor electronic device 110d generates a second derivative NFT, in the blockchain 120, associated with the second output digital asset. The second derivative NFT comprises access conditions to the second output digital asset.

More particularly, following the chaining (e.g. daisy chaining) mechanism discussed above in relation with Figure 3, the second derivative NFT comprises:
- input access conditions to a third input digital asset, which is the second output digital asset in this case, before execution of a third processing step PS3 among the processing steps scheduled by the workflow WF200. The third processing step PS3, delivers a third output digital asset from a third input digital asset which is a function of the initial digital asset. The input access conditions to the third input digital asset before execution of the third processing step PS3 being the output access conditions to the second output digital asset delivered by the second processing step PS2.
and, for at least one further processing step among the processing steps scheduled by the workflow WF200, the further processing step delivering a further output digital asset from a further input digital asset which is a function of said initial digital asset, the derivative NFT comprises:
- post-processing access conditions to the further input digital asset after the execution of the further processing step; and
- output access conditions to the further output digital asset delivered by the further processing step.
One of the further processing steps is the third processing step PS3. Thus, at least one of the further input digital asset is the second output digital asset, the respective further output digital asset being the third output digital asset.

In a corresponding manner, in a **step S451,** the blockchain 120 generates the second derivative NFT, e.g. following information received from the producer electronic device 100d during step S430.

Depending on the implementations, such second derivative NFT is an updated version of the first derivative NFT registered in the blockchain 120 or is a new created NFT registered in the blockchain 120.

Back to Figure 4, in a **step S452,** the second processor electronic device 110d assigns the second derivative NFT to the producer wallet, in the blockchain 120. In a corresponding manner, in a **step S453,** the blockchain 120 assigns the second derivative NFT to the producer wallet, e.g. following information received from the second processor electronic device 110d during step S452.

In a **step S460,** the producer electronic device 100d receives, from the blockchain 120, an information indicative that the second derivative NFT has been assigned by the second processor electronic device 110d to the producer wallet. Thus, the blockchain 120 keeps record of the ending of the second processing step PS2 implemented by the second processor electronic device 110d, e.g. through the log of the assignment in the blockchain 120.

In a **step S470,** the producer electronic device 100d assigns the second derivative NFT to a wallet, in said blockchain, associated with a third processor electronic device 110d implementing the third processing step PS3 delivering a third output digital asset from said second output digital asset.

In a corresponding manner, in a **step S471,** the blockchain 120 assigns the second derivative NFT to the wallet associated with the third processor electronic device 110d, e.g. following information received from the producer electronic device 100d during step S470.

In a **step S480,** the third processor electronic device 110d receives, from the blockchain 120, an information indicative that the second derivative NFT, has been assigned to the wallet associated with the third processor electronic device 110d.

In a **step S481,** the third processor electronic device 110d compares the input access conditions to the third input digital asset, which is the second output digital asset in this case, as defined in the second derivative NFT, with access rights previously assigned to the third processor electronic device 110d. Such comparison delivers an information representative of the third processor electronic device 110d being allowed or not to execute the third processing step PS3.

if the information is representative of the third processor electronic device 110d not being allowed to execute the third processing step PS3, the third processor electronic device 110d sends to the blockchain 120, in a **step S482,** an information indicative that the third processor electronic device 110d is not allowed to execute the third processing step. Conversely, if the information is representative of the third processor electronic device 110d being allowed to execute the third processing step, the third processor electronic device 110d executes the third processing step PS3.

Thus, the third processor electronic device 110d executes only the processing step it is allowed to through the comparison of its access rights with the access conditions associated with the third input digital asset, which is the second output digital asset in this case, in the second derivative NFT. Furthermore, it is kept record of the access to the third input digital asset as well as of the third processing step PS3 performed by the third processor electronic device 110d through the assignment of the second derivative NFT to the wallet of the third processor electronic device 110d.

By comparing, on one hand, the sequence of steps S432, S433 and S440 and, on the other hand, the sequence of steps S452, S453, S460, S470 and S471, we observe that for propagating a derivative NFT from the wallet of one given processor electronic device 110d to another processor electronic device 110d, the corresponding derivative NFT is whether:
- directly assigned by the given processor electronic device 110d to the wallet of the other processor electronic device 110d; or
- is first assigned by the given processor electronic device 110d to the wallet of the producer electronic device 100d and then the producer electronic device 100d assigns the derivative NFT to the wallet of the other processor electronic device 110d.

This behavior is general. It means that for each transition from a given processing step of the workflow WF200 executed by a given processor electronic device 110d to another processing step of the workflow WF200 executed by another processor electronic device 110d, the assignment of the corresponding derivative NFT may be directly done from the wallet of the given processor electronic device 110d to the wallet of the other processor electronic device 110d or may go through the wallet of the producer electronic device 100d.

In some embodiments, a same processor electronic device 110d may implement different processing steps. Accordingly, the steps discussed above apply equally:
- if the first processor electronic device 110d is a same processor electronic device 110d as the second processor electronic device 110d; and/or
- if the second processor electronic device 110d is a same processor electronic device 110d as the third processor electronic device 110d; and/or
- if the first processor electronic device 110d is a same processor electronic device 110d as the third processor electronic device 110d.

In some embodiments, the initial digital asset is processed according to only one processing step. As discussed above, in such case, no workflow WF200 is needed for scheduling the processing steps. The initial NFT comprises access conditions to the only one processing step.

Referring now to **Figure 5****,** in order to be able to implement the corresponding steps of the method for securing the processing of a digital asset in the various embodiments disclosed above in relationship with Figure 4, in some embodiments the producer electronic device 100d comprises:
- a non-volatile memory 503 (e.g. a read-only memory (ROM), a hard disk, a flash memory, etc.);
- a volatile memory 501 (e.g. a random-access memory or RAM) and a processor 502.

The non-volatile memory 503 is a non-transitory computer-readable carrier medium. It stores executable program code instructions, which are executed by the processor 502 in order to enable implementation of some steps of the method described above (method for securing the processing of a digital asset) in the various embodiments disclosed in relationship with Figure 4.

Upon initialization, the aforementioned program code instructions are transferred from the non-volatile memory 503 to the volatile memory 501 so as to be executed by the processor 502. The volatile memory 501 likewise includes registers for storing the variables and parameters required for this execution.

The steps of the method for securing the processing of a digital asset may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

Referring now to **Figure 6****,** in order to be able to implement the corresponding steps of the method for securing the processing of a digital asset in the various embodiments disclosed above in relationship with Figure 4, in some embodiments the processor electronic device 110d comprises:
- a non-volatile memory 603 (e.g. a read-only memory (ROM), a hard disk, a flash memory, etc.);
- a volatile memory 601 (e.g. a random-access memory or RAM) and a processor 602.

The non-volatile memory 603 is a non-transitory computer-readable carrier medium. It stores executable program code instructions, which are executed by the processor 602 in order to enable implementation of some steps of the method described above (method for securing the processing of a digital asset) in the various embodiments disclosed in relationship with Figure 4.

Upon initialization, the aforementioned program code instructions are transferred from the non-volatile memory 603 to the volatile memory 601 so as to be executed by the processor 602. The volatile memory 601 likewise includes registers for storing the variables and parameters required for this execution.

The steps of the method for securing the processing of a digital asset may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

## Claims

1. Method for securing the processing of an initial digital asset according to at least one processing step delivering an output digital asset from an input digital asset which is a function of said initial digital asset, said input digital asset and said output digital asset being associated to corresponding access conditions, said at least one processing step being executed by at least one processor electronic device (110d) communicatively connected to at least one server (120a, 120b, 120c) implementing a blockchain (120), wherein a producer electronic device (100d), communicatively connected to said at least one server, executes:
- **creating** (S410) an initial NFT (300) assigned to a producer wallet associated with said producer electronic device in said blockchain, said initial NFT being associated with said initial digital asset, said initial NFT comprising:
- input access conditions, to the initial digital asset before execution of a first processing step among said at least one processing step, said first processing step delivering a first output digital asset from said initial digital asset; and
for said at least one processing step delivering an output digital asset from an input digital asset which is a function of said initial digital asset, said initial NFT comprises:
- post-processing access conditions to the input digital asset after the execution of the processing step; and
- output access conditions to the output digital asset delivered by the processing step,
at least one of said input digital asset being said initial digital asset, the respective output digital asset being said first output digital asset;
- **assigning** (S412) the initial NFT to a wallet, in said blockchain, associated with a first processor electronic device implementing said first processing step.

2. Method according to claim 1, wherein the producer electronic device executes:
- **assigning** (S400) access rights to said at least one processor electronic device for having said processor electronic device allowed or not to execute all or part of said at least one processing step according to said access conditions.

3. Method according to claim 1 or 2, wherein the producer electronic device executes:
- **receiving** (S460), from said blockchain, an information indicative that a derivative NFT has been assigned by a second processor electronic device to the producer wallet, the second processor electronic device implementing at least one second processing step among said at least one processing step, the second processing step delivering a second output digital asset from the first output digital asset, said derivative NFT being associated with said second output digital asset and comprising access conditions to said second output digital asset.

4. Method according to claim 3, wherein said derivative NFT comprises:
- input access conditions to the second output digital asset before execution of a third processing step among said at least one processing step, said third processing step delivering a third output digital asset from said second output digital asset, said input access conditions to the second output digital asset before execution of the third processing step being the output access conditions to the second output digital asset delivered by the second processing step; and
for at least one further processing step among said at least one processing step, the further processing step delivering a further output digital asset from a further input digital asset which is a function of said initial digital asset, said derivative NFT comprises:
- post-processing access conditions to said further input digital asset after the execution of the further processing step; and
- output access conditions to said further output digital asset delivered by the further processing step,
at least one of said further input digital asset being said second output digital asset, the respective further output digital asset being said third output digital asset.

5. Method according to claim 4, wherein said producer electronic device executes:
- **assigning** (S470) the derivative NFT to a wallet, in said blockchain, associated with a third processor electronic device implementing said third processing step delivering a third output digital asset from said second output digital asset.

6. Method for securing the processing of an initial digital asset according to at least one processing step delivering an output digital asset from an input digital asset which is a function of said initial digital asset, said input digital asset and said output digital asset being associated to corresponding access conditions, said at least one processing step being executed by at least one processor electronic device (110d) communicatively connected to at least one server (120a, 120b, 120c) implementing a blockchain (120), wherein a given processor electronic device implementing at least one given processing step among said at least one processing step, the given processing step delivering a given output digital asset from a given input digital asset function of said initial digital asset, executes for said given processing step:
- **receiving** (S420, S440, S480) from said blockchain, an information indicative that an input NFT has been assigned to a wallet, in said blockchain, associated with the given processor electronic device, said input NFT being associated with said given input digital asset, said input NFT comprising:
- input access conditions, to the given input digital asset before execution of the given processing step;
for at least one further processing step among said at least one processing step, the further processing step delivering a further output digital asset from a further input digital asset which is a function of said initial digital asset, said input NFT comprises:
- post-processing access conditions to the further input digital asset after the execution of the processing step; and
- output access conditions to the further output digital asset,
at least one of said further input digital asset being said given input digital asset, the respective further output digital asset being said given output digital asset;
- **comparing** (S421, S441, S481) the input access conditions to the given input digital asset with access rights previously assigned to the given processor electronic device delivering an information representative of the given processor electronic device being allowed or not to execute said given processing step;
if said information is representative of the given processor electronic device being allowed to execute said given processing step:
- **executing** (PS1, PS2, PS3) said given processing step;
- **generating** (S430, S450) a derivative NFT, in said blockchain, associated with said given output digital asset, said derivative NFT comprising access conditions to said given output digital asset.

7. Method according to claim 6, wherein if said information is representative of the given processor electronic device not being allowed to execute said given processing step, the given processor electronic device executes:
- **sending** (S422, S442), to said blockchain, an information indicative that the given processor electronic device is not allowed to execute said given processing step.

8. Method according to claim 6 or 7, wherein said derivative NFT comprises:
- input access conditions to the given output digital asset before execution of a given further processing step among said at least one processing step, the given further processing step delivering a given further output digital asset from a given further input digital asset which is a function of said initial digital asset, said given further input digital asset being said given output digital asset delivered by the given processing step, said input access conditions to the given further input digital asset before execution of the given further processing step being the output access conditions to the given output digital asset; and
for at least one further processing step among said at least one processing step, the further processing step delivering a further output digital asset from a further input digital asset which is a function of said initial digital asset, said derivative NFT comprises:
- post-processing access conditions to said further input digital asset after the execution of the further processing step; and
- output access conditions to said further output digital asset delivered by the further processing step,
at least one of said further input digital asset being said given output digital asset, the respective further output digital asset being said given further output digital asset.

9. Method according to any of the claims 6 to 8, wherein the given processor electronic device executes:
- **receiving** (S400), from a producer electronic device communicatively connected to said at least one server, said access rights for having said given processor electronic device allowed or not to execute said at least one given processing step according to said access conditions.

10. Method according to any of the claims 6 to 9, wherein the given processor electronic device executes:
- **assigning** (S432) the derivative NFT to a wallet, in said blockchain, associated with a further processor electronic device implementing said given further processing step among said at least one processing step.

11. Method according to any of the claims 6 to 9, wherein the given processor electronic device executes:
- **assigning** (S452) the derivative NFT to a wallet, in said blockchain, associated with said producer electronic device.

12. Computer program product **characterized in that** it comprises program code instructions for implementing a method according to any of the claims 1 to 11.

13. Electronic device (100d), named producer electronic device, for securing the processing of an initial digital asset, according to at least one processing step delivering an output digital asset from an input digital asset which is a function of said initial digital asset, said input digital asset and said output digital asset being associated to corresponding access conditions, said at least one processing step being executed by at least one processor electronic device (110d) communicatively connected to at least one server (120a, 120b, 120c) implementing a blockchain (120), said producer electronic device being communicatively connected to said at least one server, wherein it comprises a processor (502) or a dedicated computing machine configured for:
- **creating** (S410) an initial NFT (300) assigned to a wallet, named producer wallet, in said blockchain, said producer wallet being associated with said producer electronic device and said initial NFT being associated with said initial digital asset, said initial NFT comprising:
- input access conditions, to the initial digital asset before execution of a first processing step among said at least one processing step, said first processing step delivering a first output digital asset from said initial digital asset; and
for said at least one processing step delivering an output digital asset from an input digital asset which is a function of said initial digital asset, said initial NFT comprises:
- post-processing access conditions to the input digital asset after the execution of the processing step; and
- output access conditions to the output digital asset delivered by the processing step,
at least one of said input digital asset being said initial digital asset, the respective output digital asset being said first output digital asset;
- **assigning** (S412) the initial NFT to a wallet, in said blockchain, associated with a first processor electronic device implementing said first processing step.

14. Electronic device (110d), named processor electronic device, for securing the processing of an initial digital asset according to at least one processing step delivering an output digital asset from an input digital asset which is a function of said initial digital asset, said input digital asset and said output digital asset being associated to corresponding access conditions, said at least one processing step being executed by at least one of said processor electronic device communicatively connected to at least one server (120a, 120b, 120c) implementing a blockchain (120), wherein it comprises a processor (602) or a dedicated computing machine configured for:
- **receiving** (S420, S440, S480) from said blockchain, an information indicative that an input NFT has been assigned to a wallet, in said blockchain, associated with the given processor electronic device, said input NFT being associated with said given input digital asset, said input NFT comprising:
- input access conditions, to the given input digital asset before execution of the given processing step;
for at least one further processing step among said at least one processing step, the further processing step delivering a further output digital asset from a further input digital asset which is a function of said initial digital asset, said input NFT comprises:
- post-processing access condition, to the further input digital asset after the execution of the processing step; and
- output access conditions, to the further output digital asset,
at least one of said further input digital asset being said given input digital asset, the respective further output digital asset being said given output digital asset;
- **comparing** (S421, S441, S481) the input access conditions to the given input digital asset with access rights previously assigned to the given processor electronic device delivering an information representative of the given processor electronic device being allowed or not to execute said given processing step;
- if said information is representative of the given processor electronic device being allowed to execute said given processing step, **executing** (PS1, PS2, PS3) said given processing step;
- **generating** (S430, S450) a derivative NFT, in said blockchain, associated with said given output digital asset, said derivative NFT comprising access conditions to said given output digital asset.

## Patentansprüche

1. Verfahren zum Sichern der Verarbeitung eines anfänglichen digitalen Assets gemäß mindestens einem Verarbeitungsschritt, bei dem ein digitales Ausgangsasset aus einem digitalen Eingangsasset geliefert wird, das eine Funktion des anfänglichen digitalen Assets ist, wobei das digitale Eingangsasset und das digitale Ausgangsasset entsprechenden Zugriffsbedingungen zugeordnet sind, wobei mindestens ein Verarbeitungsschritt von mindestens einer elektronischen Prozessorvorrichtung (110d) ausgeführt wird, die kommunikativ mit mindestens einem Server (120a, 120b, 120c) verbunden ist, der eine Blockchain (120) implementiert,
wobei eine elektronische Vorrichtung des Herstellers (100d), die kommunikativ mit dem mindestens einen Server verbunden ist, Folgendes ausführt:
- **Erstellen** (S410) einer anfänglichen NFT (300), die einem mit der elektronischen Vorrichtung des Herstellers in der Blockchain zugeordneten Hersteller-Wallet zugewiesen ist, wobei die anfängliche NFT mit dem anfänglichen digitalen Asset zugeordnet ist, wobei die anfängliche NFT Folgendes umfasst:
- Eingangszugriffsbedingungen auf das anfängliche digitale Asset vor der Ausführung eines ersten Verarbeitungsschritts unter dem mindestens einen Verarbeitungsschritt, wobei der erste Verarbeitungsschritt ein erstes digitales Ausgangsasset aus dem anfänglichen digitalen Asset liefert; und
für den mindestens einen Verarbeitungsschritt, der ein digitales Ausgangsasset aus einem digitalen Eingangsasset liefert, der eine Funktion des anfänglichen digitalen Assets ist, umfasst die anfängliche NFT Folgendes:
- Zugriffsbedingungen für die Nachverarbeitung zu dem digitalen Eingangsasset nach der Ausführung des Verarbeitungsschritts; und
- Ausgangszugriffsbedingungen auf das von dem Verarbeitungsschritt gelieferte digitale Ausgangsasset, mindestens eines der digitalen Eingangsassets ist das anfängliche digitale Asset, und das jeweilige digitale Ausgangsasset ist das erste digitale Ausgangsasset;
- **Zuweisen** (S412) der anfänglichen NFT zu einer Wallet in der Blockchain, die einer ersten elektronischen Prozessorvorrichtung zugeordnet ist, die den ersten Verarbeitungsschritt implementiert.

2. Verfahren nach Anspruch 1, wobei die elektronische Vorrichtung des Herstellers Folgendes ausführt:
- **Zuweisen** (S400) von Zugriffsrechten an die mindestens eine elektronische Prozessorvorrichtung, damit die elektronische Prozessorvorrichtung den gesamten oder einen Teil des mindestens einen Verarbeitungsschritts gemäß den Zugriffsbedingungen ausführen darf oder nicht.

3. Verfahren nach Anspruch 1 oder 2, wobei die elektronische Vorrichtung des Herstellers Folgendes ausführt:
- **Empfangen** (S460) einer Information von der Blockchain, die anzeigt, dass eine abgeleitete NFT durch eine zweite elektronische Prozessorvorrichtung der Hersteller-Wallet zugewiesen wurde, wobei die zweite elektronische Prozessorvorrichtung mindestens einen zweiten Verarbeitungsschritt unter dem mindestens einen Verarbeitungsschritt implementiert, wobei der zweite Verarbeitungsschritt ein zweites digitales Ausgangsasset aus dem ersten digitalen Ausgangsasset liefert, wobei die abgeleitete NFT mit dem zweiten digitalen Ausgangsasset verbunden ist und Zugriffsbedingungen auf das zweite digitale Ausgangsasset umfasst.

4. Verfahren nach Anspruch 3**,** wobei die abgeleitete NFT Folgendes umfasst:
- Eingangszugriffsbedingungen zu dem zweiten digitalen Ausgangsasset vor der Ausführung eines dritten Verarbeitungsschritts unter dem mindestens einen Verarbeitungsschritt, wobei der dritte Verarbeitungsschritt ein drittes digitales Ausgangsasset aus dem zweiten digitalen Ausgangsasset liefert, wobei die Eingangszugriffsbedingungen zu dem zweiten digitalen Ausgangsasset vor der Ausführung des dritten Verarbeitungsschritts die Ausgangszugriffsbedingungen zu dem zweiten digitalen Ausgangsasset sind, die von dem zweiten Verarbeitungsschritt geliefert werden; und
für mindestens einen weiteren Verarbeitungsschritt unter dem mindestens einen Verarbeitungsschritt, wobei der weitere Verarbeitungsschritt, der ein weiteres digitales Ausgangsasset aus einem weiteren digitalen Eingangsasset liefert, der eine Funktion des anfänglichen digitalen Assets ist, die abgeleitete NFT Folgendes umfasst:
- Zugriffsbedingungen für die Nachverarbeitung zu dem weiteren digitalen Eingangsasset nach der Ausführung des Verarbeitungsschritts; und
- Ausgangszugriffsbedingungen zu dem weiteren von dem Verarbeitungsschritt gelieferten digitalen Ausgangsasset, mindestens eines der weiteren digitalen Eingangsassets ist das zweite digitale Ausgangsasset, und das jeweilige weitere digitale Ausgangsasset ist das dritte digitale Ausgangsasset.

5. Verfahren nach Anspruch 4, wobei die elektronische Vorrichtung des Herstellers Folgendes ausführt:
- **Zuweisen** (S470) der abgeleiteten NFT zu einer Wallet in der Blockchain, die mit einer dritten elektronischen Prozessorvorrichtung verbunden ist, die den dritten Verarbeitungsschritt implementiert und ein drittes digitales Ausgangsasset aus dem zweiten digitalen Ausgangsasset liefert.

6. Verfahren zum Sichern der Verarbeitung eines anfänglichen digitalen Assets gemäß mindestens einem Verarbeitungsschritt, bei dem ein digitales Ausgangsasset aus einem digitalen Eingangsasset geliefert wird, das eine Funktion des anfänglichen digitalen Assets ist, wobei das digitale Eingangsasset und das digitale Ausgangsasset entsprechenden Zugriffsbedingungen zugeordnet sind, wobei mindestens ein Verarbeitungsschritt von mindestens einer elektronischen Prozessorvorrichtung (110d) ausgeführt wird, die kommunikativ mit mindestens einem Server (120a, 120b, 120c) verbunden ist, der eine Blockchain (120) implementiert,
wobei eine gegebene elektronische Prozessorvorrichtung, die mindestens einen gegebenen Verarbeitungsschritt unter dem mindestens einen Verarbeitungsschritt ausführt, wobei der gegebene Verarbeitungsschritt ein gegebenes digitales Ausgangsasset aus einer gegebenen digitalen Eingangsasset-Funktion des anfänglichen digitalen Assets liefert, für den gegebenen Verarbeitungsschritt Folgendes ausführt:
- **Empfangen** (S420, S440, S480) einer Information von der Blockchain, die anzeigt, dass eine Eingangs-NFT einer Wallet in der Blockchain zugewiesen wurde, die mit der gegebenen elektronischen Prozessorvorrichtung verbunden ist, wobei die Eingangs-NFT mit dem gegebenen digitalen Eingangsasset verbunden ist und die Eingangs-NFT Folgendes umfasst:
- Eingangszugriffsbedingungen auf das gegebene digitale Eingangsasset vor Ausführung des gegebenen Verarbeitungsschritts;
für mindestens einen weiteren Verarbeitungsschritt unter dem mindestens einen Verarbeitungsschritt, wobei der weitere Verarbeitungsschritt ein weiteres digitales Ausgangsasset aus einem weiteren digitalen Eingangsasset liefert, das eine Funktion des ursprünglichen digitalen Assets ist, wobei die Eingangs-NFT Folgendes umfasst:
- Zugriffsbedingungen für die Nachverarbeitung zu dem weiteren digitalen Eingangsasset nach der Ausführung des Verarbeitungsschritts; und
- Ausgangszugriffsbedingungen zu dem weiteren digitalen Ausgangsasset,
mindestens eines der weiteren digitalen Eingangsassets ist das gegebene digitale Eingangsasset, und das jeweilige weitere digitale Ausgangsasset ist das gegebene digitale Ausgangsasset;
- **Vergleichen** (S421, S441, S481) der Eingangszugriffsbedingungen auf das gegebene digitale Eingangsasset mit Zugriffsrechten, die zuvor der gegebenen elektronischen Prozessorvorrichtung zugewiesen wurden, die eine Information liefert, die repräsentativ für die gegebene elektronische Prozessorvorrichtung ist, die den gegebenen Verarbeitungsschritt ausführen darf oder nicht;
wenn diese Information repräsentativ für die gegebene elektronische Prozessorvorrichtung ist, die den Verarbeitungsschritt ausführen darf:
- **Ausführen** (PS1, PS2, PS3) des Verarbeitungsschritts;
- **Erzeugen** (S430, S450) einer abgeleiteten NFT in der Blockchain, die mit dem gegebenen digitalen Ausgangsasset verbunden ist, wobei die abgeleitete NFT Zugriffsbedingungen zu dem gegebenen digitalen Ausgangsasset umfasst.

7. Verfahren nach Anspruch 6, wobei, wenn die Information repräsentativ dafür ist, dass die gegebene elektronische Prozessorvorrichtung den gegebenen Verarbeitungsschritt nicht ausführen darf, die gegebene elektronische Prozessorvorrichtung Folgendes ausführt:
- **Senden** (S422, S442) an die Blockchain einer Information, die darauf hinweist, dass die gegebene elektronische Prozessorvorrichtung nicht berechtigt ist, den gegebenen Verarbeitungsschritt auszuführen.

8. Verfahren nach Anspruch 6 oder 7, wobei die abgeleitete NFT Folgendes umfasst:
- Eingangszugriffsbedingungen auf das gegebene digitale Ausgangsasset vor der Ausführung eines gegebenen weiteren Verarbeitungsschritts unter dem mindestens einen Verarbeitungsschritt, wobei der gegebene weitere Verarbeitungsschritt ein gegebenes weiteres digitales Ausgangsasset aus einem gegebenen weiteren digitalen Eingangsasset liefert, das eine Funktion des ursprünglichen digitalen Assets ist, wobei das gegebene weitere digitale Eingangsasset das gegebene digitale Ausgangsasset ist, das durch den gegebenen Verarbeitungsschritt geliefert wird, wobei die Eingangszugriffsbedingungen auf das gegebene weitere digitale Eingangsasset vor der Ausführung des gegebenen weiteren Verarbeitungsschritts die Ausgangszugriffsbedingungen auf das gegebene digitale Ausgangsasset sind; und
für mindestens einen weiteren Verarbeitungsschritt unter dem mindestens einen Verarbeitungsschritt, wobei der weitere Verarbeitungsschritt, der ein weiteres digitales Ausgangsasset aus einem weiteren digitalen Eingangsasset liefert, der eine Funktion des anfänglichen digitalen Assets ist, die abgeleitete NFT Folgendes umfasst:
- Zugriffsbedingungen für die Nachverarbeitung zu dem weiteren digitalen Eingangsasset nach der Ausführung des Verarbeitungsschritts; und
- Ausgangszugriffsbedingungen zu dem weiteren von dem Verarbeitungsschritt gelieferten digitalen Ausgangsasset, mindestens eines der weiteren digitalen Eingangsassets ist das gegebene digitale Ausgangsasset, wobei das jeweilige weitere digitale Ausgangsasset das gegebene weitere digitale Ausgangsasset ist.

9. Verfahren nach einem der Ansprüche 6 bis 8, wobei die gegebene elektronische Prozessorvorrichtung Folgendes ausführt:
- **Empfangen** (S400) von einer elektronischen Vorrichtung des Herstellers, die kommunikativ mit dem mindestens einen Server verbunden ist, der Zugriffsrechte dafür, dass die gegebene elektronische Prozessorvorrichtung die Ausführung des mindestens einen gegebenen Verarbeitungsschritts gemäß den Zugriffsbedingungen gestattet hat oder nicht.

10. Verfahren nach einem der Ansprüche 6 bis 9, wobei die gegebene elektronische Prozessorvorrichtung Folgendes ausführt:
- **Zuweisen** (S432) der abgeleiteten NFT zu einer Wallet, in der Blockchain, die einer weiteren elektronischen Prozessorvorrichtung zugeordnet ist, die den gegebenen weiteren Verarbeitungsschritt unter dem mindestens einen Verarbeitungsschritt implementiert.

11. Verfahren nach einem der Ansprüche 6 bis 9, wobei die gegebene elektronische Prozessorvorrichtung Folgendes ausführt:
- **Zuweisen** (S452) der abgeleiteten NFT zu einer Wallet in der Blockchain, die mit der elektronischen Vorrichtung des Herstellers verbunden ist.

12. Computerprogrammprodukt, **dadurch gekennzeichnet, dass** es Programmcodeanweisungen zur Implementierung eines Verfahrens nach einem der Ansprüche 1 bis 11 umfasst.

13. Elektronische Vorrichtung (100d), elektronische Vorrichtung des Herstellers, zur Sicherung der Verarbeitung eines anfänglichen digitalen Assets, gemäß mindestens einem Verarbeitungsschritt, der ein digitales Ausgangsasset aus einem digitalen Eingangsasset liefert, der eine Funktion des anfänglichen digitalen Assets ist, wobei das digitale Eingangsasset und das digitale Ausgangsasset entsprechenden Zugriffsbedingungen zugeordnet sind, wobei mindestens ein Verarbeitungsschritt von mindestens einer elektronischen Prozessorvorrichtung (110d) ausgeführt wird kommunikativ mit mindestens einem Server (120a, 120b, 120c) verbunden, der eine Blockchain (120) implementiert, wobei die elektronische Vorrichtung des Herstellers kommunikativ mit dem mindestens einen Server verbunden ist,
wobei er einen Prozessor (502) oder eine dedizierte Rechenmaschine umfasst, die für Folgendes eingerichtet ist:
- **Erstellen** (S410) einer anfänglichen NFT (300), die einer Wallet, der Hersteller-Wallet, in der Blockchain zugewiesen ist, wobei die Hersteller-Wallet mit der elektronischen Vorrichtung des Herstellers verbunden ist und die anfängliche NFT mit dem ersten digitalen Asset verbunden ist, wobei die anfängliche NFT Folgendes umfasst:
- Eingangszugriffsbedingungen auf das anfängliche digitale Asset vor der Ausführung eines ersten Verarbeitungsschritts unter dem mindestens einen Verarbeitungsschritt, wobei der erste Verarbeitungsschritt ein erstes digitales Ausgangsasset aus dem anfänglichen digitalen Asset liefert; und
für den mindestens einen Verarbeitungsschritt, der ein digitales Ausgangsasset aus einem digitalen Eingangsasset liefert, der eine Funktion des anfänglichen digitalen Assets ist, umfasst die anfängliche NFT Folgendes:
- Zugriffsbedingungen für die Nachverarbeitung zu dem digitalen Eingangsasset nach der Ausführung des Verarbeitungsschritts; und
- Ausgangszugriffsbedingungen auf das von dem Verarbeitungsschritt gelieferte digitale Ausgangsasset, mindestens eines der digitalen Eingangsassets ist das anfängliche digitale Asset, und das jeweilige digitale Ausgangsasset ist das erste digitale Ausgangsasset;
- **Zuweisen** (S412) der anfänglichen NFT zu einer Wallet in der Blockchain, die einer ersten elektronischen Prozessorvorrichtung zugeordnet ist, die den ersten Verarbeitungsschritt implementiert.

14. Elektronische Vorrichtung (110d), elektronische Prozessorvorrichtung, um die Verarbeitung eines anfänglichen digitalen Assets gemäß mindestens einem Verarbeitungsschritt zu sichern, der ein digitales Ausgangsasset ausgehend von einem digitalen Eingangsasset liefert, das eine Funktion des anfänglichen digitalen Assets ist, wobei das digitale Eingangsasset und das digitale Ausgangsasset entsprechenden Zugriffsbedingungen zugeordnet sind, wobei der mindestens eine Verarbeitungsschritt durch mindestens eine der elektronischen Prozessorvorrichtung ausgeführt wird, die kommunikativ mit mindestens einem Server (120a, 120b, 120c) verbunden ist, der eine Blockchain (120) implementiert, wobei er einen Prozessor (602) oder eine dedizierte Rechenmaschine umfasst, die für Folgendes eingerichtet ist:
- **Empfangen** (S420, S440, S480) einer Information von der Blockchain, die anzeigt, dass eine Eingangs-NFT einer Wallet in der Blockchain zugewiesen wurde, die mit der gegebenen elektronischen Prozessorvorrichtung verbunden ist, wobei die Eingangs-NFT mit dem gegebenen digitalen Eingangsasset verbunden ist und die Eingangs-NFT Folgendes umfasst:
- Eingangszugriffsbedingungen auf das gegebene digitale Eingangsasset vor Ausführung des gegebenen Verarbeitungsschritts;
für mindestens einen weiteren Verarbeitungsschritt unter dem mindestens einen Verarbeitungsschritt, wobei der weitere Verarbeitungsschritt ein weiteres digitales Ausgangsasset aus einem weiteren digitalen Eingangsasset liefert, das eine Funktion des ursprünglichen digitalen Assets ist, wobei die Eingangs-NFT Folgendes umfasst:
- Zugriffsbedingung für die Nachverarbeitung zu dem weiteren digitalen Eingangsasset nach der Ausführung des Verarbeitungsschritts; und
- Ausgangszugriffsbedingungen zu dem weiteren digitalen Ausgangsasset,
mindestens eines der weiteren digitalen Eingangsassets ist das gegebene digitale Eingangsasset, und das jeweilige weitere digitale Ausgangsasset ist das gegebene digitale Ausgangsasset;
- **Vergleichen** (S421, S441, S481) der Eingangszugriffsbedingungen auf das gegebene digitale Eingangsasset mit Zugriffsrechten, die zuvor der gegebenen elektronischen Prozessorvorrichtung zugewiesen wurden, die eine Information liefert, die repräsentativ für die gegebene elektronische Prozessorvorrichtung ist, die den gegebenen Verarbeitungsschritt ausführen darf oder nicht;
- wenn die Information repräsentativ dafür ist, dass die gegebene elektronische Prozessorvorrichtung berechtigt ist, den gegebenen Verarbeitungsschritt auszuführen, wobei (PS1, PS2, PS3) der gegebene Verarbeitungsschritt **ausgeführt** wird;
- **Erzeugen** (S430, S450) einer abgeleiteten NFT in der Blockchain, die mit dem gegebenen digitalen Ausgangsasset verbunden ist, wobei die abgeleitete NFT Zugriffsbedingungen zu dem gegebenen digitalen Ausgangsasset umfasst.

## Revendications

1. Procédé de sécurisation du traitement d'un actif numérique initial selon au moins une étape de traitement délivrant un actif numérique de sortie à partir d'un actif numérique d'entrée qui est une fonction dudit actif numérique initial, ledit actif numérique d'entrée et ledit actif numérique de sortie étant associés à des conditions d'accès correspondantes, ladite au moins une étape de traitement étant exécutée par au moins un dispositif électronique processeur (110d) connecté en communication à au moins un serveur (120a, 120b, 120c) mettant en œuvre une blockchain (120),
dans lequel un dispositif électronique producteur (100d), connecté en communication audit au moins un serveur, exécute :
- la **création** (S410) d'un NFT initial (300) attribué à un portefeuille producteur associé audit dispositif électronique producteur dans ladite blockchain, ledit NFT initial étant associé audit actif numérique initial, ledit NFT initial comprenant :
- des conditions d'accès d'entrée, à l'actif numérique initial avant l'exécution d'une première étape de traitement parmi ladite au moins une étape de traitement, ladite première étape de traitement délivrant un premier actif numérique de sortie à partir dudit actif numérique initial ; et
pour ladite au moins une étape de traitement délivrant un actif numérique de sortie à partir d'un actif numérique d'entrée qui est une fonction dudit actif numérique initial, ledit NFT initial comprend :
- des conditions d'accès post-traitement à l'actif numérique d'entrée après l'exécution de l'étape de traitement ; et
- des conditions d'accès de sortie à l'actif numérique de sortie délivré par l'étape de traitement,
au moins l'un dudit actif numérique d'entrée étant ledit actif numérique initial, l'actif numérique de sortie respectif étant ledit premier actif numérique de sortie ;
- **l'attribution** (S412) du NFT initial à un portefeuille, dans ladite blockchain, associé à un premier dispositif électronique processeur mettant en œuvre ladite première étape de traitement.

2. Procédé selon la revendication 1, dans lequel le dispositif électronique producteur exécute :
- **l'attribution** (S400) de droits d'accès audit au moins un dispositif électronique processeur pour que ledit dispositif électronique processeur soit autorisé à exécuter tout ou partie de ladite au moins une étape de traitement selon lesdites conditions d'accès.

3. Procédé selon la revendication 1 ou 2, dans lequel le dispositif électronique producteur exécute :
- **la réception** (S460), en provenance de ladite blockchain, d'informations indiquant qu'un NFT dérivé a été attribué par un deuxième dispositif électronique processeur au portefeuille producteur, le deuxième dispositif électronique processeur mettant en œuvre au moins une deuxième étape de traitement parmi ladite au moins une étape de traitement, la deuxième étape de traitement délivrant un deuxième actif numérique de sortie à partir du premier actif numérique de sortie, ledit NFT dérivé étant associé audit deuxième actif numérique de sortie et comprenant des conditions d'accès audit deuxième actif numérique de sortie.

4. Procédé selon la revendication 3, dans lequel ledit NFT dérivé comprend :
- des conditions d'accès d'entrée au deuxième actif numérique de sortie avant l'exécution d'une troisième étape de traitement parmi ladite au moins une étape de traitement, ladite troisième étape de traitement délivrant un troisième actif numérique de sortie à partir dudit deuxième actif numérique de sortie, lesdites conditions d'accès d'entrée au deuxième actif numérique de sortie avant l'exécution de la troisième étape de traitement étant les conditions d'accès de sortie au deuxième actif numérique de sortie délivré par la deuxième étape de traitement ; et
pour au moins une étape de traitement supplémentaire parmi ladite au moins une étape de traitement, l'étape de traitement supplémentaire délivrant un actif numérique de sortie supplémentaire à partir d'un actif numérique d'entrée supplémentaire qui est une fonction dudit actif numérique initial, ledit NFT dérivé comprend :
- des conditions d'accès post-traitement audit actif numérique d'entrée supplémentaire après l'exécution de l'étape de traitement supplémentaire ; et
- des conditions d'accès de sortie audit actif numérique de sortie supplémentaire délivré par l'étape de traitement supplémentaire,
au moins l'un dudit actif numérique d'entrée supplémentaire étant ledit deuxième actif numérique de sortie, l'actif numérique de sortie supplémentaire respectif étant ledit troisième actif numérique de sortie.

5. Procédé selon la revendication 4, dans lequel ledit dispositif électronique producteur exécute :
- **l'attribution** (S470) du NFT dérivé à un portefeuille, dans ladite blockchain, associé à un troisième dispositif électronique processeur mettant en œuvre ladite troisième étape de traitement délivrant un troisième actif numérique de sortie à partir dudit deuxième actif numérique de sortie.

6. Procédé de sécurisation du traitement d'un actif numérique initial selon au moins une étape de traitement délivrant un actif numérique de sortie à partir d'un actif numérique d'entrée qui est une fonction dudit actif numérique initial, ledit actif numérique d'entrée et ledit actif numérique de sortie étant associés à des conditions d'accès correspondantes, ladite au moins une étape de traitement étant exécutée par au moins un dispositif électronique processeur (110d) connecté en communication à au moins un serveur (120a, 120b, 120c) mettant en œuvre une blockchain (120),
dans lequel un dispositif électronique processeur donné mettant en œuvre au moins une étape de traitement donnée parmi ladite au moins une étape de traitement, l'étape de traitement donnée délivrant un actif numérique de sortie donné à partir d'un actif numérique d'entrée donné qui est une fonction dudit actif numérique initial, exécute pour ladite étape de traitement donnée :
- **la réception** (S420, S440, S480) en provenance de ladite blockchain, d'informations indiquant qu'un NFT d'entrée a été attribué à un portefeuille, dans ladite blockchain, associé au dispositif électronique processeur donné, ledit NFT d'entrée étant associé audit actif numérique d'entrée donné, ledit NFT d'entrée comprenant :
- des conditions d'accès d'entrée, à l'actif numérique d'entrée donné avant l'exécution de l'étape de traitement donnée ;
pour au moins une étape de traitement supplémentaire parmi ladite au moins une étape de traitement, l'étape de traitement supplémentaire délivrant un actif numérique de sortie supplémentaire à partir d'un actif numérique d'entrée supplémentaire qui est une fonction dudit actif numérique initial, ledit NFT d'entrée comprend :
- des conditions d'accès post-traitement à l'actif numérique d'entrée supplémentaire après l'exécution de l'étape de traitement ; et
- des conditions d'accès de sortie à l'actif numérique de sortie supplémentaire,
au moins l'un dudit actif numérique d'entrée supplémentaire étant ledit actif numérique d'entrée donné, l'actif numérique de sortie supplémentaire respectif étant ledit actif numérique de sortie donné ;
- **la comparaison** (S421, S441, S481) des conditions d'accès d'entrée à l'actif numérique d'entrée donné à des droits d'accès précédemment attribués au dispositif électronique processeur donné délivrant des informations représentatives du fait que le dispositif électronique processeur donné est autorisé ou non à exécuter ladite étape de traitement donnée ;
si lesdites informations sont représentatives du fait que le dispositif électronique processeur donné est autorisé à exécuter ladite étape de traitement donnée :
- **l'exécution** (PS1, PS2, PS3) de ladite étape de traitement donnée ;
- **la génération** (S430, S450) d'un NFT dérivé, dans ladite blockchain, associé audit actif numérique de sortie donné, ledit NFT dérivé comprenant des conditions d'accès audit actif numérique de sortie donné.

7. Procédé selon la revendication 6, dans lequel si lesdites informations sont représentatives du fait que le dispositif électronique processeur donné n'est pas autorisé à exécuter ladite étape de traitement donnée, le dispositif électronique processeur donné exécute :
- **l'envoi** (S422, S442), à ladite blockchain, d'informations indiquant que le dispositif électronique processeur donné n'est pas autorisé à exécuter ladite étape de traitement donnée.

8. Procédé selon la revendication 6 ou 7, dans lequel ledit NFT dérivé comprend :
- des conditions d'accès d'entrée à l'actif numérique de sortie donné avant l'exécution d'une étape de traitement supplémentaire donnée parmi ladite au moins une étape de traitement, l'étape de traitement supplémentaire donnée délivrant un actif numérique de sortie supplémentaire donné à partir d'un actif numérique d'entrée supplémentaire donné qui est une fonction dudit actif numérique d'entrée initial, ledit actif numérique d'entrée supplémentaire donné étant ledit actif numérique de sortie donné délivré par l'étape de traitement donnée, lesdites conditions d'accès d'entrée à l'actif numérique d'entrée supplémentaire donné avant l'exécution de l'étape de traitement supplémentaire donnée étant les conditions d'accès de sortie à l'actif numérique de sortie donné ; et pour au moins une étape de traitement supplémentaire parmi ladite au moins une étape de traitement, l'étape de traitement supplémentaire délivrant un actif numérique de sortie supplémentaire à partir d'un actif numérique d'entrée supplémentaire qui est une fonction dudit actif numérique initial, ledit NFT dérivé comprend :
- des conditions d'accès post-traitement audit actif numérique d'entrée supplémentaire après l'exécution de l'étape de traitement supplémentaire ; et
- des conditions d'accès de sortie audit actif numérique de sortie supplémentaire délivré par l'étape de traitement supplémentaire,
au moins l'un dudit actif numérique d'entrée supplémentaire étant ledit actif numérique de sortie donné, l'actif numérique de sortie supplémentaire respectif étant ledit actif numérique de sortie supplémentaire donné.

9. Procédé selon l'une quelconque des revendications 6 à 8, dans lequel le dispositif électronique processeur donné exécute :
- **la réception** (S400), en provenance d'un dispositif électronique producteur connecté en communication audit au moins un serveur, desdits droits d'accès pour que ledit dispositif électronique processeur donné soit autorisé ou non à exécuter ladite au moins une étape de traitement donnée selon lesdites conditions d'accès.

10. Procédé selon l'une quelconque des revendications 6 à 9, dans lequel le dispositif électronique processeur donné exécute :
- **l'attribution** (S432) du NFT dérivé à un portefeuille, dans ladite blockchain, associé à un dispositif électronique processeur supplémentaire mettant en œuvre ladite étape de traitement supplémentaire donnée parmi ladite au moins une étape de traitement.

11. Procédé selon l'une quelconque des revendications 6 à 9, dans lequel le dispositif électronique processeur donné exécute :
- **l'attribution** (S452) du NFT dérivé à un portefeuille, dans ladite blockchain, associé audit dispositif électronique producteur.

12. Produit programme d'ordinateur **caractérisé en ce qu'**il comprend des instructions de code de programme pour mettre en œuvre un procédé selon l'une quelconque des revendications 1 à 11.

13. Dispositif électronique (100d), appelé dispositif électronique producteur, pour sécuriser le traitement d'un actif numérique initial, selon au moins une étape de traitement délivrant un actif numérique de sortie à partir d'un actif numérique d'entrée qui est une fonction dudit actif numérique initial, ledit actif numérique d'entrée et ledit actif numérique de sortie étant associés à des conditions d'accès correspondantes, ladite au moins une étape de traitement étant exécutée par au moins un dispositif électronique processeur (110d) connecté en communication à au moins un serveur (120a, 120b, 120c) mettant en œuvre une blockchain (120), ledit dispositif électronique producteur étant connecté en communication audit au moins un serveur,
dans lequel il comprend un processeur (502) ou une machine informatique dédiée configurée pour :
- **créer** (S410) un NFT initial (300) attribué à un portefeuille, appelé portefeuille producteur, dans ladite blockchain, ledit portefeuille producteur étant associé audit dispositif électronique producteur et ledit NFT initial étant associé audit actif numérique initial, ledit NFT initial comprenant :
- des conditions d'accès d'entrée, à l'actif numérique initial avant l'exécution d'une première étape de traitement parmi ladite au moins une étape de traitement, ladite première étape de traitement délivrant un premier actif numérique de sortie à partir dudit actif numérique initial ; et
pour ladite au moins une étape de traitement délivrant un actif numérique de sortie à partir d'un actif numérique d'entrée qui est une fonction dudit actif numérique initial, ledit NFT initial comprend :
- des conditions d'accès post-traitement à l'actif numérique d'entrée après l'exécution de l'étape de traitement ; et
- des conditions d'accès de sortie à l'actif numérique de sortie délivré par l'étape de traitement,
au moins l'un dudit actif numérique d'entrée étant ledit actif numérique initial, l'actif numérique de sortie respectif étant ledit premier actif numérique de sortie ;
- **attribuer** (S412) le NFT initial à un portefeuille, dans ladite blockchain, associé à un premier dispositif électronique processeur mettant en œuvre ladite première étape de traitement.

14. Dispositif électronique (110d), appelé dispositif électronique processeur, pour sécuriser le traitement d'un actif numérique initial selon au moins une étape de traitement délivrant un actif numérique de sortie à partir d'un actif numérique d'entrée qui est une fonction dudit actif numérique initial, ledit actif numérique d'entrée et ledit actif numérique de sortie étant associés à des conditions d'accès correspondantes, ladite au moins une étape de traitement étant exécutée par au moins l'un dudit dispositif électronique processeur connecté en communication à au moins un serveur (120a, 120b, 120c) mettant en œuvre une blockchain (120),
dans lequel il comprend un processeur (602) ou une machine informatique dédiée configurée pour :
- **recevoir** (S420, S440, S480) en provenance de ladite blockchain, des informations indiquant qu'un NFT d'entrée a été attribué à un portefeuille, dans ladite blockchain, associé au dispositif électronique processeur donné, ledit NFT d'entrée étant associé audit actif numérique d'entrée donné, ledit NFT d'entrée comprenant :
- des conditions d'accès d'entrée, à l'actif numérique d'entrée donné avant l'exécution de l'étape de traitement donnée ;
pour au moins une étape de traitement supplémentaire parmi ladite au moins une étape de traitement, l'étape de traitement supplémentaire délivrant un actif numérique de sortie supplémentaire à partir d'un actif numérique d'entrée supplémentaire qui est une fonction dudit actif numérique initial, ledit NFT d'entrée comprend :
- une condition d'accès post-traitement, à l'actif numérique d'entrée supplémentaire après l'exécution de l'étape de traitement ; et
- des conditions d'accès de sortie, à l'actif numérique de sortie supplémentaire,
au moins l'un dudit actif numérique d'entrée supplémentaire étant ledit actif numérique d'entrée donné, l'actif numérique de sortie supplémentaire respectif étant ledit actif numérique de sortie donné ;
- **comparer** (S421, S441, S481) les conditions d'accès d'entrée à l'actif numérique d'entrée donné à des droits d'accès précédemment attribués au dispositif électronique processeur donné délivrant des informations représentatives du fait que le dispositif électronique processeur donné est autorisé ou non à exécuter ladite étape de traitement donnée ;
- si lesdites informations sont représentatives du fait que le dispositif électronique processeur donné est autorisé à exécuter ladite étape de traitement donnée, **exécuter** (PS1, PS2, PS3) ladite étape de traitement donnée ;
- **générer** (S430, S450) un NFT dérivé, dans ladite blockchain, associé audit actif numérique de sortie donné, ledit NFT dérivé comprenant des conditions d'accès audit actif numérique de sortie donné.
